(19) Europäisches Patentamt
European Patent Office
Office européen des brevets

(11) EP 2 904 063 B1

(12) **EUROPEAN PATENT SPECIFICATION**

(45) Date of publication and mention
of the grant of the patent:
**01.06.2022 Bulletin 2022/22**

(21) Application number: **13766871.1**

(22) Date of filing: **17.09.2013**

(51) International Patent Classification (IPC):
**C09K 3/14** (2006.01)   **C01B 21/064** (2006.01)
**C01B 21/072** (2006.01)

(52) Cooperative Patent Classification (CPC):
**C09K 3/1409; C01B 21/0648; C01B 21/0722;**
**C09K 3/1445;** C01P 2002/72; C01P 2004/03;
C01P 2004/61; C01P 2006/12

(86) International application number:
**PCT/US2013/060095**

(87) International publication number:
**WO 2014/055230 (10.04.2014 Gazette 2014/15)**

(54) **PROCESS FOR THE PREPARATION OF CUBIC BORON NITRIDE PARTICLES**

VERFAHREN ZUR HERSTELLUNG VON KUBISCHEN BORNITRIDPARTIKELN

PROCÉDÉ DE PRÉPARATION DES PARTICULES DE NITRURE DE BORE CUBIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **03.10.2012 US 201261709250 P**

(43) Date of publication of application:
**12.08.2015 Bulletin 2015/33**

(73) Proprietor: **Diamond Innovations, Inc.**
**Worthington, OH 43085 (US)**

(72) Inventor: **DUMM, Timothy**
**Westerville, Ohio 43082 (US)**

(74) Representative: **Neilson, Martin Mark et al**
**Murgitroyd & Company Leeds**
**Arena Point**
**Merrion Way**
**Leeds LS2 8PA (GB)**

(56) References cited:
**GB-A- 1 513 990    US-A- 4 647 546**
**US-A- 4 951 427    US-A1- 2010 068 524**

• **S. MALKIN: "Current Trends in CBN Grinding**
**Technology", CIRP ANNALS - MANUFACTURING**
**TECHNOLOGY, vol. 34, no. 2, 1 January 1985**
**(1985-01-01), pages 557-563, XP055089229, ISSN:**
**0007-8506, DOI: 10.1016/S0007-8506(07)60188-7**

## Description

## TECHNICAL FIELD AND INDUSTRIAL APPLICABILITY

The present invention relates to a method for producing hard particles used for abrasive grinding, honing, finishing, polishing and other applications. More specifically, this invention relates to a method for producing cubic boron nitride particles that have a unique morphology. The cubic boron nitride (CBN) particles produced by the method of this invention have a roughened surface texture for enhancing performance in industrial applications.

## BACKGROUND OF THE INVENTION

Abrasive particles are used in many applications such as grinding, honing, finishing, polishing and other surface finishing applications. Common abrasive particles include aluminum oxide, silicon carbide, boron carbide and tungsten carbide. These particles can be referred to as conventional abrasives and have a Moh's hardness of less than 9.0 Diamond and cubic boron nitride are referred to as superabrasive particles and have a Moh's hardness of 9.5-10. When superabrasive particles like diamond or cubic boron nitride are used in grinding and finishing applications, the tools last much longer than conventional abrasives and because of the low wear rates, workpiece tolerances are maintained for longer periods of time before the tools need to be replaced. Cubic boron nitride abrasives are particularly advantageous when grinding or finishing ferrous materials. This is because, although diamond is harder than cubic boron nitride, diamond reacts detrimentally with iron and nickel at high temperatures causing a significant reduction in performance. Cubic boron nitride, however, does not react with iron or nickel and abrasive performance is maintained even at high temperatures created in the grinding process.

Although superabrasive tools perform better than those using conventional abrasives, optimal performance depends on how well the tools retain the abrasive particles and on how well the particles interact with the workpiece material. An important part of a tool's performance depends on how well the abrasive particles are bonded to the tool. Many types of bonds may be used for making superabrasive tools. These include metal, vitreous (glass) and resin type bonds. The bonding, or holding, of the abrasive in a tool may be achieved through physical and/or chemical attachment with the bonding material. The degree of physical attachment may be affected by the roughness of the abrasive particle. Particles having smooth surfaces and no chemical bonding must rely on being heavily enveloped in the bonding material in order to be adequately retained in the tool. In this case, as the surrounding bond material wears away and the abrasive particle becomes more exposed, the bond will eventually fail to hold the abrasive and it will pull out of the tool. The pull-out phenomenon often occurs well before the useful life of the abrasive is obtained. This effect limits the tool from realizing its full value in an application. Similar particles having a rougher morphology will be retained in the tool longer and will extend the useful life of the tool. This will reduce processing costs and improve quality for the parts that are processed. An additional benefit of using a surface-roughened CBN crystal would be that the exposed roughness will improve the free-cutting ability of the tool thereby allowing the tool to achieve the same amount of work with less energy. Also, the micro-features established by the roughness on the abrasive could result in a surface roughness on the workpiece that is lower than what would have been achieved with a standard abrasive.

Mesh-size CBN particles tend to have smooth, faceted faces and even the finer, micron size CBN particles display smooth surfaces. As such, pull-outs are a common phenomenon when using CBN abrasives in metal bond and resin-bond tools. A common method of improving the retention of CBN in abrasive tools is by applying a metallic coating to the abrasive. The coating surface itself may then either provide a rougher surface for better mechanical retention, or the coating may allow better chemical attachment to the bond material. An example of a coating that provides roughness is an electroless nickel coating. Nickel coatings of this type are usually applied to the abrasive particles such that the nickel comprises 50-70% by weight of the coated abrasive. Although the nickel coating is rougher and provides improved mechanical retention, the nickel itself is not chemically bonded to the abrasive and is only a shell around the particle. Therefore, it is still possible for the abrasive to pop-out of the bonded nickel at a surface for better mechanical retention, or the coating may allow better chemical attachment to the bond material. An example of a coating that provides roughness is an electroless nickel coating. Nickel coatings of this type are usually applied to the abrasive particles such that the nickel comprises 50-70% by weight of the coated abrasive. Although the nickel coating is rougher and provides improved mechanical retention, the nickel itself is not chemically bonded to the abrasive and is only a shell around the particle. Therefore, it is still possible for the abrasive to pop-out of the bonded nickel at a point before the full use of the abrasive has been realized. Nickel coated abrasives are commonly used in resin-bonded tools.

Another example of a coating used for improving retention is a titanium coating. Unlike the electroless nickel coating, titanium coatings are applied to the abrasives using chemical vapor deposition methods. In this case, the titanium is chemically bonded to the particle. However, even the coating is chemically bonded to the particle; the thin titanium coatings do not impart any additional roughness to the abrasive surface. Titanium coatings improve chemical bonding when the abrasive is used in a metallic bond. If this chemical bond is not sufficient, pullouts can still occur.

To date, the methods employed for increasing the roughness of CBN particles has been limited to metal coatings and etching the surface with caustic or alkaline chemicals. A new approach has been developed that utilizes certain metals that react strongly with CBN to form deep pits and spikes on the surface of the particles. These features are different than those formed by caustic chemical etching and provide a new type of CBN abrasive that can add performance improvement over existing CBN. S. MALKIN, "Current Trends in CBN Grinding Technology", CIRP ANNALS - MANUFACTURING TECHNOLOGY, (19850101), vol. 34, no. 2, pages 557 - 563 describes the grinding performance of CBN abrasives within grinding wheel technology. US 2010/0068524 details a methods for producing modified abrasive particles having specific surface morphology. US 4,647,546 describes the process of mixing CBN particles with aluminium and compression at 65 kbar and 1400°C. The modified product is recovered by etching.

As can be seen, there is a need for a superabrasive and method of making superabrasive for roughened surface texture for enhancing performance in industrial applications.

## SUMMARY OF THE INVENTION

According to one aspect of the present invention there is provided a method for producing abrasive cubic boron nitride (CBN) particles formed from monocrsystaline or polycrystalline CBN having an irregular surface comprising the steps of: providing a plurality of abrasive CBN particles; blending a reactive metal powder with the abrasive particles; compressing the blended powder and particles into a pellet; heating said pellet to chemically react the CBN and the metal powder; recovering modified abrasive CBN particles from the pellet by dissolving the pellet in acid; wherein the external surface of the recovered CBN particles is textured to comprise pockets or etch-pits.

Optionally, said reactive metal powder is aluminum. Optionally, said heating step comprises heating said pellet to a temperature of at least about 1200 °C. Optionally, a mean size of the abrasive CBN particles is between about 0.1 to about 500 μm. Optionally, a weight percent ratio of the metal powder to abrasive CBN particles is 1:10 to 10:1. Optionally, the recovered modified abrasive CBN particles have an average weight loss of more than 5% relative to the abrasive CBN particles before said steps of blending, compressing, heating and recovering.

The foregoing and other objects, features and advantages of the invention will become understood from the following disclosure in which one or more embodiments of the invention are described in drawings, descriptions and claims. It is contemplated that variations in procedures may appear to a person skilled in the art without departing from the scope of the invention.

## BRIEF DESCRIPTION OF THE DRAWINGS

FIG. 1 shows results of x-ray diffraction analysis of CBN powder that was heated with aluminum powder for 1 hour at 1400 °C according to an exemplary embodiment. The analysis shows aluminum nitride peaks indicative of a solid state reaction has occurred.

FIG. 2a shows scanning electron microscope (SEM) images of conventional 8-15μm CBN according to another exemplary embodiment;

FIG. 2b shows scanning electron microscope (SEM) images of 8-15μm CBN modified using an aluminum powder process according to another exemplary embodiment.

FIG. 3a shows scanning electron microscope (SEM) images of conventional 2-4μm CBN according to another exemplary embodiment;

FIG. 3b shows scanning electron microscope (SEM) images of 2-4μm CBN modified using an aluminum powder process according to another exemplary embodiment; and

FIG. 4 shows a method of making modified cubic boron nitride particles according an exemplary embodiment.

## DETAILED DESCRIPTION OF EXEMPLARY EMBODIMENTS

Definitions

In describing and claiming the present invention, the following terminology will be used in accordance with the definitions set forth below.

The term "abrasive", as used herein, refers to any material used to wear away softer material.

The term "material removal", as used herein, refers to the weight of a workpiece removed in a given period of time reported in milligrams, grams, etc.

The term, "material removal rate", as used herein, refers to material removed divided by the time interval reported as milligrams per minute, grams per hour, etc.

The term "particle", as used herein, refers to a discrete body. A particle is also considered a crystal or a grain.

The term "pit", as used herein, refers to an indentation or crevice in the surface of a particle, either an indentation or crevice in the surface of a two-dimensional image or an indentation or crevice in an object.

The term "spike", as used herein, refers to a sharp projection pointing outward from the centroid of a particle, a sharp projection pointing outward from the centroid of a two-dimensional image or a sharp projection pointing outward from an object.

The term "superabrasive", as used herein, refers to an abrasive possessing superior hardness and abrasion resistance. CBN and cubic boron nitride are examples of superabrasives and have Knoop indentation hardness values of over 7500.

The term "weight loss", as used herein, refers to the difference in weight of a group of particles before being subject to the modification treatment of the present invention and the weight of the same mass of CBN particles or abrasive particles after being subject to the modification treatment of the present invention.

The term "workpiece", as used herein, refers to parts or objects from which material is removed by grinding, polishing, lapping or other material removal methods.

The term "perimeter", as used herein, refers to the boundary of a closed plane figure or the sum of all borders of a two-dimensional image.

The term "convex perimeter", as used herein, refers to a line joining Feret tangent points, where Feret is the distance between two parallel tangents touching the boundary on each side of a two dimensional image or object.

The term "surface roughness", as used herein, refers to the measurement of a two-dimensional image that quantifies the extent or degree of pits and spikes of an object's edges or boundaries as stated in the CLEMEX image analyzer, Clemex Vision User's Guide PE 3.5 ©2001. Surface roughness is determined by the ratio of the convex perimeter divided by the perimeter.

$$\text{Surface Roughness} = \frac{ConvexPerimeter}{Perimeter}$$

Note that as the degree of pits and spikes increases, the surface roughness factor decreases.

The term "sphericity", as used herein, refers to the estimate of the enclosed area of a two dimensional image or object ($4\pi A$) divided by the square of perimeter ($p^2$).

$$\text{Sphericity} = \frac{4\pi A}{p^2}$$

The term "surface area" as used herein, refers to the external surface of a particle. When used with a plurality of particles, i.e., powder, the term specific surface area is used and is reported as surface area per gram of powder.

It is important to note that although the terms defined above refer to measuring two-dimensional particle profiles using microscopic measuring techniques, it is understood that the features extend to the three-dimensional form. Automated image analysis of particle size and shape is recognized by one skilled in the art as a reliable, reproducible method of measuring particle characteristics. Although the CLEMEX image analyzer was used, similar devices are available that will reproduce the data.

The present invention relates to abrasive particles having a unique surface morphology. Further, the invention includes a process for modifying cubic boron nitride (cBN) particles for obtaining rough, irregular particles having a unique surface morphology. The process for modifying the surface of the CBN requires that aluminum is used as a reactant metal with the CBN. At high temperatures, it has been found that the CBN will react with aluminum and form aluminum nitride. This reaction is thought to create pits and spikes in the surface of the CBN. After the reaction occurs, the aluminum nitride can be removed revealing the roughened CBN surface. The CBN particles of the present invention include a significantly roughened surface texture whereby many intricate pockets or etch-pits are established on the surface of the CBN. This texture provides many more sharp cutting edges on a particle than are present on typical CBN particle. It is expected that tool performance improves in applications utilizing the CBN particles of the present invention. These applications include precision grinding where the CBN particles are incorporated within a resin, metal or vitrified bond system. It is also expected that the CBN particles of the present invention improve the performance in honing and superfinishing especially where the bonding materials include resins, metals or glass frits. The CBN particles of the present invention would be expected to improve the performance of tools in instances where the particles are electroplated or electroformed to the tool or when the CBN particles are co-deposited within a coating.

The modification process of the present invention may also be used in modifying other forms of CBN including, but not limited to, monocrystalline and polycrystalline CBN. The present invention applies to a wide range of CBN sizes from hundreds of microns in diameter to micron sized powders.

In one exemplary embodiment of the present invention, CBN particles in sizes of less than about 100 microns are used. However, CBN particles in sizes over about 100 microns may be used as well. In an exemplary embodiment, the sizes of the CBN particles range from about 0.1 to about 500 microns. An example of CBN particles that may be used is BMP-I 8-15 micron, cubic boron nitride particles manufactured by Diamond Innovations (Worthington, Ohio, U.S.A).

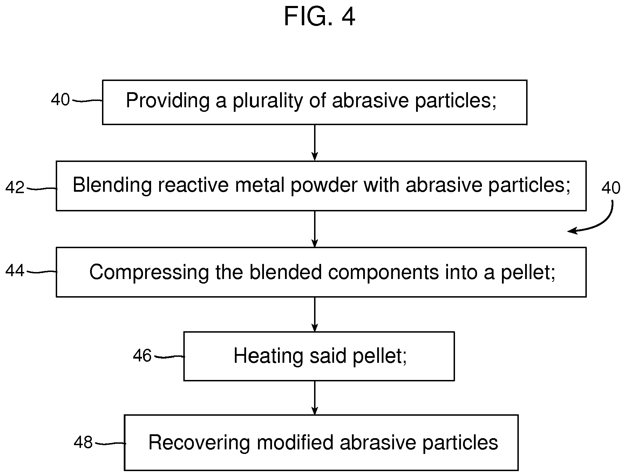

As shown in FIG. 4, in an exemplary embodiment, a method 40 for producing abrasive particles having a unique surface morphology may comprise: providing a plurality of abrasive particles, such as cubic boron nitride particles in a step 40; blending reactive metal powder with the abrasive particles in a step 42; compressing the blended components into a pellet in a step 44; heating said pellet in a step 46; and recovering modified abrasive particles in a step 48. The cubic boron nitride particles may be monocrystalline cBN particles. The reactive metal powder may be aluminum, for example. The heating metal coated particles may be at least about 1200°C. The ratio of metal powder to the abrasive particles may be 1:10 to 10:1, for example. The abrasive particles modified via the method 40 may have an average weight loss of more than about 5% of the weight loss compared to conventional abrasive particles not subjected to the method.

CBN particles from about 10 to about 80 weight percent CBN particles and from about 20 to about 90 weight percent aluminum particles are mixed using any appropriate mixing method that achieves a uniform mixture. In the present invention, the weighed portions of the aluminum and CBN particles may be put into a jar, sealed and inserted into a mixing device such as a Turbula® shaker-mixer (Glen Mills, Inc., Clifton, New Jersey, U.S.A) for at least about one hour or, alternatively, about 30 minutes to about one hour. A binder may optionally be added to the mixture prior to mixing. Binders provide lubricity to particle surfaces allowing a denser packing and more intimate contact between the metal powder and CBN. Binders also help in holding a pressed body together as a green-body.

The mixture is then compressed so as to create an intimate mixture of CBN particles and aluminum particles. Any method may be used to compress the CBN particles and aluminum particles so long that they form an intimate mixture and the particles are in very close contact with one another. One method used to compress the mixture may be to place the mixture into a fixed die set on a press. An example of a suitable press is a Carver® pellet press manufactured by Carver, Inc. (Wabash, IN). In the die press, the mixture is subjected to pressure between about 5 and about 50,000 psi, between about 10,000 to about 40,000 psi or between about 15,000 to about 30,000 psi to form a pellet. Although pelletizing the mixture is taught, it is not necessary that the mixture of CBN and aluminum particles be formed into a pellet, only that the particles be compressed so as to form intimate contact with one another. Isostatic pressing with deformable tooling may also be used to achieve the intimate contact.

Alternatively, the mixture may also be compressed by pressing it into a thin sheet that is several millimeters to several inches thick, i.e., by high pressure compaction rolls or briquetting rolls. The formed sheets may then be cut into smaller sections for further processing as discussed below. Another method of compressing the mixture of aluminum and CBN particles includes mixing and extruding the mixture under pressure. Pelletizing the mixture of CBN and aluminum particles via a pelletizer or tumbling the mixture in a tumbling apparatus are also alternative methods that may be used to compress the mixture. The pellets, bricks, briquetttes or cakes may be formed by these methods may then be further processed as discussed below.

Additional methods of compressing the mixture of aluminum and CBN particles include injection molding, extrusion, pressing the mixture into a container or tape casting. Alternatively, individual CBN particles may be coated with metal particles by ion implantation, sputtering, spray drying, electrolytic coating, electroless coating or any other applicable method so long as the aluminum and CBN particles are in intimate contact with each other.

After compressing the mixture of CBN and aluminum particles, the compressed mixture, which may be in a pellet, an aggregate or other condensed forms, is placed into a furnace and, in a hydrogen atmosphere, vacuum atmosphere, or an inert gas atmosphere, heated from about 900 °C to about 1600 °C. Temperatures of about 1000 °C to about 1400 °C or about 1100 °C to about 1200 °C, for example, may be used. The compressed mixture may be heated for a period of time from about five minutes up to about five hours, for example. Time periods ranging from about thirty minutes up to about two hours or of about one to about two hours, for example, may be used.

After the heating cycle is complete and the powder is cooled, the modified CBN particles are recovered by dissolving the aluminum/CBN pellets in common acids. Acids that are used may include hydrochloric acid, hydrofluoric acids, nitric acid and certain combinations thereof. Acids, or combinations thereof, are added in an acid-to-coated-CBN ratio of 100:1 up to 1000:1 (by volume). The mixture is then heated between about 100 °C to about 120 °C for a period of from about six to about eight hours, for example. The solution is then cooled, the liberated CBN settles and the solution is decanted. The acid cleaning and heating steps are repeated until substantially all of the aluminum has been digested.

Depending on the furnace conditions chosen, more or less reaction may occur between the metal and the CBN. The more the metal powder etches into the CBN, the more aluminum nitride is formed and, thus, more weight is lost by the CBN. To completely dissolve the aluminum nitride, higher quantities of acid may be used or additional dissolution treatments may be necessary. The CBN particles are then washed to remove acids and residue, such as in water. Subsequently, the CBN particles are dried in an oven, air dried, subjected to microwave drying or other drying methods known in the art.

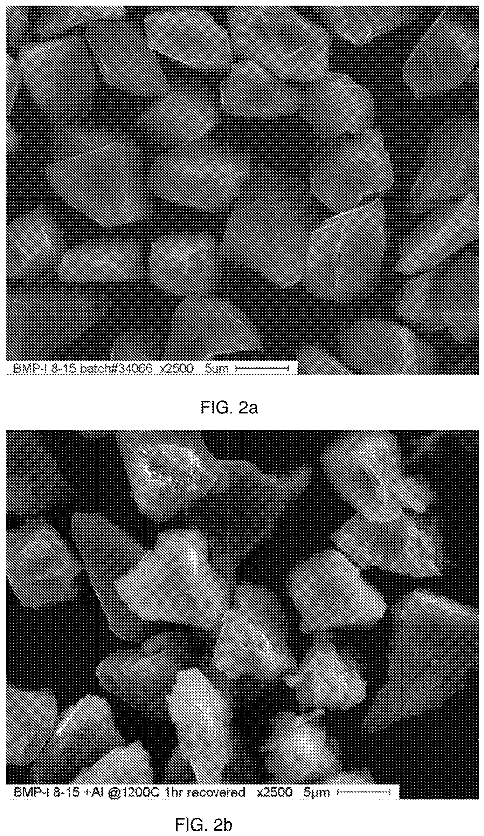

The modified CBN particles have very rough, irregular surfaces as shown in FIG. 2(b). In addition to the roughened appearance, the modified CBN particles have unique characteristics as compared to conventional CBN particles shown in FIG 2(a). The conventional CBN particles produced by milling were not subjected to the modification treatment of the present invention.

The modified CBN particles may comprise spikes and pits. The spikes act as cutting edges some applications. When the modified cBN particles are used in a fixed bond system, the pits and/or the spikes help secure the particle within the bond system. The lengths of the spikes and depths of the pits may vary according to the modification treatment parameters. The average depth of the pits on a particle ranges in size from about 5% to about 70% of the longest length of the particles. In some exemplary embodiment, the depth of the pits on a particle may range in size from about 40% to about 60% of the longest length of the particle.

The modified cBN particles exhibit unique characteristics in surface roughness, sphericity and material removal. In one exemplary embodiment, the surfaces roughness of the modified cBN may be less than about 0.95, for example. In another exemplary embodiment, surface roughness of cBN may be between about 0.50 and about 0.80, for example

There may be a correlation between cBN weight loss and surface area. The specific surface area of the modified cBN particles having weight loss greater than 35% is about 20 percent higher compared to conventional cubic boron nitride particles having the same particle size distribution. It can be observed that the specific surface area of the particles is directly proportional to the extent of the reaction of the cubic boron nitride particles and iron particles during the modification treatment process.

The abrasive particles may be useful in many applications including, lapping, grinding, cutting, polishing, dicing, sintered abrasives or abrasive compacts, wire for wire saws or honing. In general, one would expect that the roughened surface would aid in the retention of the CBN particle within the tool or resin bond system. The use of the abrasive would aid in providing better retention of the abrasive particle in the metal or resin matrix, hence increasing the life of the wire saw. The abrasive may also provide higher material removal rate with better free-cutting ability.

The modified CBN particles can have irregular surfaces, wherein the average surface roughness of said particles is less than about 0.95, may be used and incorporated into a tool, such as a grinding wheel, a fixed abrasive wire, a honing tool, a dicing blade, a polishing film, a chemical mechanical polishing (CMP) pad conditioner, a polishing compound, a composite cubic boron nitride wear coating, for example.

With regard to wire saw applications, the abrasive particles may be attached to a wire by electroplating, metal sintering or polymeric or resin bonds. Electroplated wire saws generally contain a single layer of abrasive particles co-deposited with a layer of nickel metal. Some wires also use a resin to attach the abrasive particles in the metal or resin matrix, hence increasing the life of the wire saw. The modified abrasive particles may also provide higher material removal rate with better free-cutting ability.

Materials typically cut with wire saws include silicon, sapphire, SiC, metals, ceramics, carbon, quartz, stone, glass, composite, and granite.

The surface modified abrasives and superabrasives may optionally be coated with a metal coating, i.e., a metal selected from Groups IVA, VA, VIA or an alloy thereof, including combinations thereof.

EXAMPLE I

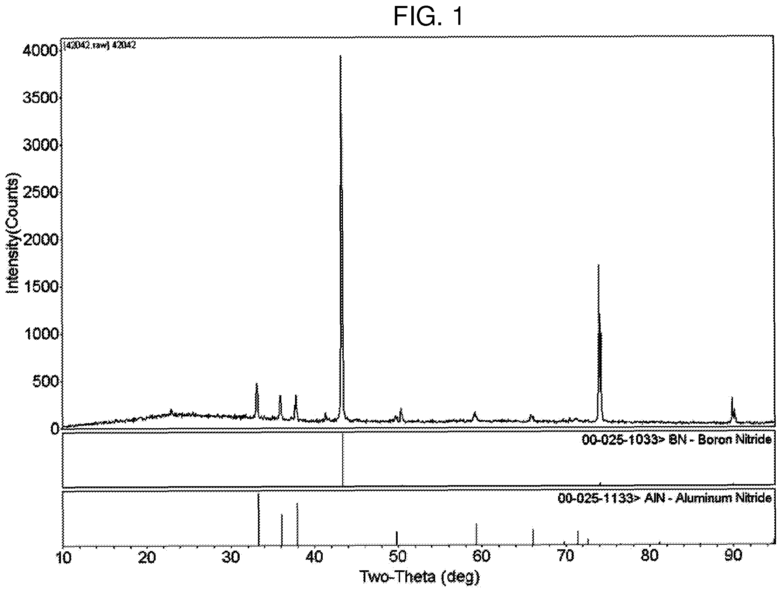

A 8-15 $\mu$m monocrystalline CBN powder with a mean size of 12 $\mu$m was blended with an aluminum powder with a mean size of 3 $\mu$m using a blend ratio of 40 weight percent CBN particles and 60 weight percent aluminum powder (no binder). The blend was compacted into a 2 cm x 0.5 cm pellet using a Carver® press at a pressure of 20,000 psi. The pellet was heated at 1200 °C for 1 hour in forming gas atmosphere. The CBN pellet was allowed to cool. The CBN particles were recovered from the pellet by digesting in an acid mixture of 4:3:1, $H_2O$: HCl: $HNO_3$ until the pellet dissolved and the liberated particles settled to the bottom of the beaker. The CBN particles were neutralized with deionized water, recovered and dried. X-Ray diffraction analysis was performed on the powder and is shown in FIG. 1. These results show that some residual aluminum nitride is present in the powder confirming that a chemical reaction did occur. Samples of the recovered CBN were placed into a scanning electron microscope and photos were taken of these particles. FIG. 2(b) shows these particles and clearly shows evidence of significant surface etching. The unmodified 8-15$\mu$m CBN particles are shown in the same FIG. 2(a) for comparison.

EXAMPLE II

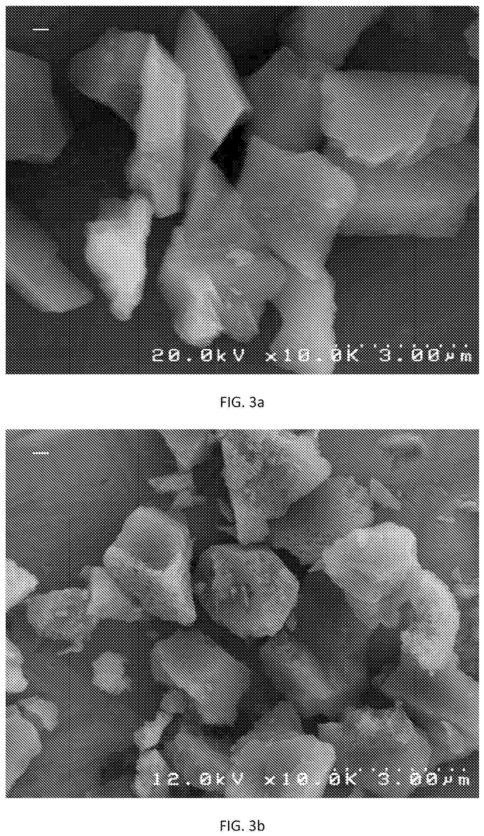

A 2-4 $\mu$m monocrystalline CBN powder with a mean size of 3 $\mu$m was blended with an aluminum powder with a mean size of 3 $\mu$m using a blend ratio of 40 weight percent CBN particles and 60 weight percent aluminum powder (no binder). The blend was compacted into a 2 cm x 0.5 cm pellet using a Carver press at a pressure of 20,000 psi. The pellet was heated at 1200 °C for 1 hour in forming gas atmosphere. The CBN pellet was allowed to cool. The CBN particles were recovered from the pellet by digesting in an acid mixture of 4:3:1, $H_2O$: HCl: HNO3 until the pellet dissolved and the liberated particles were settled to the bottom of the beaker. The CBN particles were neutralized with deionized water, recovered and dried. Samples of the recovered CBN were placed into a scanning electron microscope and photos were taken for these particles. FIG. 3(b) shows these particles and clearly shows evidence of significant surface etching. The unmodified 2-4 $\mu$m CBN particles are shown in the same FIG. 3(a), for comparison.

**Claims**

1. A method for producing abrasive cubic boron nitride, CBN, particles formed from monocrsystaline or polycrystalline CBN having an irregular surface comprising the steps of:

   providing a plurality of abrasive CBN particles;
   blending a reactive metal powder with the abrasive particles;
   compressing the blended powder and particles into a pellet;

heating said pellet to chemically react the CBN and the metal powder;
recovering modified abrasive CBN particles from the pellet by dissolving the pellet in acid;
wherein the external surface of the recovered CBN particles is textured to comprise pockets or etch-pits.

2. The method of claim 1, wherein said reactive metal powder is aluminum.

3. The method of claims 1 or 2, wherein said heating step comprises heating said pellet to a temperature of at least 1200 °C.

4. The method of any one of the preceding claims, where a mean size of the abrasive CBN particles is between 0.1 to 500 $\mu$m.

5. The method of any preceding claim, wherein a weight percent ratio of the metal powder to abrasive CBN particles is 1:10 to 10:1.

6. The method of any one of the preceding claims, wherein the recovered modified abrasive CBN particles have an average weight loss of more than 5% relative to the abrasive CBN particles before said steps of blending, compressing, heating and recovering.

**Patentansprüche**

1. Verfahren zur Herstellung von kubischem Bornitrid (CBN)-Schleifpartikeln, gebildet aus monokristallinem oder polykristallinem CBN mit einer unregelmäßigen Oberfläche, umfassend die folgenden Schritte:

Bereitstellen einer Mehrzahl von CBN-Schleifpartikeln;
Mischen eines reaktiven Metallpulvers mit den Schleifpartikeln;
Komprimieren des gemischten Pulvers der Partikel zu einem Pellet;
Erhitzen des Pellets unter chemischer Reaktion des CBN und des Metallpulvers;
Abtrennen der modifizierten CBN-Schleifpartikel aus dem Pellet durch Auflösen des Pellets in Säure;
wobei die äußere Oberfläche der abgetrennten CBN-Partikel so strukturiert ist, dass sie Löcher oder Ätzkerben enthält.

2. Verfahren gemäß Anspruch 1, wobei das reaktive Metallpulver Aluminium ist.

3. Verfahren gemäß Anspruch 1 oder 2, wobei der Schritt des Erhitzens das Erhitzen des Pellets auf eine Temperatur von wenigstens 1200°C umfasst.

4. Verfahren gemäß einem der vorangehenden Ansprüche, wobei die mittlere Größe der CBN-Schleifpartikel zwischen 0,1 und 500 $\mu$m beträgt.

5. Verfahren gemäß einem der vorangehenden Ansprüche, wobei das Verhältnis in Gewichtsprozent des Metallpulvers zu den CBN-Schleifpartikeln 1:10 bis 10:1 beträgt.

6. Verfahren gemäß einem der vorangehenden Ansprüche, wobei die abgetrennten modifizierten CBN-Schleifpartikel einen durchschnittlichen Gewichtsverlust von mehr als 5% in Bezug auf die CBN-Schleifpartikel vor den Schritten des Mischens, Komprimierens, Erhitzens und Abtrennens aufweisen.

**Revendications**

1. Procédé pour produire des particules de nitrure de bore cubique, CBN, abrasives formées à partir de CBN monocristallin ou polycristallin ayant une surface irrégulière, comprenant les étapes consistant à :

disposer d'une pluralité de particules de CBN abrasives ;
mélanger une poudre métallique réactive avec les particules abrasives ;
comprimer la poudre mélangée et les particules en une pastille ;
chauffer ladite pastille pour faire réagir chimiquement le CBN et la poudre métallique ;
récupérer les particules de CBN abrasives modifiées à partir de la pastille par dissolution de la pastille dans un acide ;
dans lequel la surface externe des particules de CBN récupérées est texturée de manière à comprendre des poches ou des piqûres d'attaque.

2. Procédé selon la revendication 1, dans lequel ladite poudre métallique réactive est de l'aluminium.

3. Procédé selon la revendication 1 ou 2, dans lequel ladite étape de chauffage comprend le chauffage de ladite pastille à une température d'au moins 1 200°C.

4. Procédé selon l'une quelconque des revendications précédentes, dans lequel la taille moyenne des particules de CBN abrasives est comprise entre 0,1 et 500 $\mu$m.

5. Procédé selon l'une quelconque des revendications précédentes, dans lequel un rapport en pourcentage en poids de la poudre métallique aux particules de CBN abrasives est de 1:10 à 10:1.

6. Procédé selon l'une quelconque des revendications précédentes, dans lequel les particules de CBN abrasives modifiées récupérées ont une perte de poids moyenne de plus de 5 % par rapport aux particules de CBN abrasives avant lesdites étapes de mélange, compression, chauffage et récupération.

FIG. 1

EP 2 904 063 B1

FIG. 2a

FIG. 2b

FIG. 3a

FIG. 3b

# FIG. 4

40 — | Providing a plurality of abrasive particles; |

42 — | Blending reactive metal powder with abrasive particles; | 40

44 — | Compressing the blended components into a pellet; |

46 — | Heating said pellet; |

48 — | Recovering modified abrasive particles |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100068524 A

- US 4647546 A

**Non-patent literature cited in the description**

- **CBN. S. MALKIN.** Current Trends in CBN Grinding Technology. *CIRP ANNALS - MANUFACTURING TECHNOLOGY,* 01 January 1985, vol. 34 (2), 557-563